# EUROPEAN PATENT SPECIFICATION

(11) **EP 2 534 189 B1**
(45) Date of publication and mention of the grant of the patent: **06.05.2015**
(21) Application number: 11705057.5
(22) Date of filing: 08.02.2011
(51) Int. Cl.: C08G 59/08, C08G 59/14, C08G 59/30, C08G 59/32

(54) **PHOSPHORUS-CONTAINING EPOXY RESIN**
PHOSPHORHALTIGES EPOXIDHARZ
RÉSINE ÉPOXYDE CONTENANT DU PHOSPHORE

(30) Priority: 12.02.2010 US 303890 P
(43) Date of publication of application: 19.12.2012
(73) Proprietor: Dow Global Technologies LLC, Midland, MI 48674 (US)
(72) Inventor: MULLINS, Michael, J., Houston, TX 77030 (US); THIBAULT, Raymond, J., Lake Jackson TX 77566 (US); WILSON, Mark, B., Clute TX 77531 (US)
(74) Representative: Beck Greener
(86) International application number: PCT/US2011/000225
(87) International publication number: WO 2011/100049

(56) References cited:
- EP-A1- 1 818 350
- WO-A1-2009/055666
- WO-A1-2009/114383
- US-A1- 2002 119 317
- US-A1- 2003 024 177
- US-A1- 2008 200 617
- KAWAGUCHI S ET AL: "Tetra:functional epoxy cpds. - curable to form heat resistant prods", WPI / THOMSON,, vol. 1983, no. 51, 12 November 1983 (1983-11-12), XP002527054,

## Description

### Field of the Disclosure

The present disclosure relates generally to epoxy resins and in particular halogen-free, phosphorus-containing epoxy resins.

### Background

Epoxy resins are used in both industrial and consumer electronics because of, among other things, their chemical resistance, mechanical strength and electrical properties. For example, epoxy resins can be used in electronics as laminates, adhesive materials and/or insulating materials, such as interlayer insulating films. To be useful for these applications, the epoxy resins need to provide certain necessary physical, thermal, electrical insulation and moisture resistance properties. For example, it is advantageous for epoxy resins used for electric applications to have a high glass transition temperature (Tg).

Epoxy resins, however, can be flammable. As such, different approaches have been made to impart flame resistance to epoxy resins. Two main approaches have been taken to provide flame resistance. The first approach makes use of halogen compounds. Halogen-containing compounds have been commonly used in the electronic industry to impart flame resistance to electrical and electronic assemblies. For example, tetrabromobisphenol-A (TBBA) is a typical halogen-containing compound that has been widely used as a flame retardant for epoxy resins. Although halogen-containing compounds can be effective, they are considered by some to be undesirable from an environmental standpoint due to the possibility of formation hazardous substances during the incineration of electronic components at their end of life. The second approach, in a response to the environmental concerns of the first approach, is an "environmentally friendly" approach in which halogen-free compounds are used to impart flame retardency. Relevant prior art is disclosed in WO 2009/114383, which discloses flame-retardant compositions comprising an epoxy resin desired from phenolic and dialdehyde precursors.

### Summary

Embodiments of the present disclosure include a phosphorus-containing epoxy resin of a compound of Formula (I): 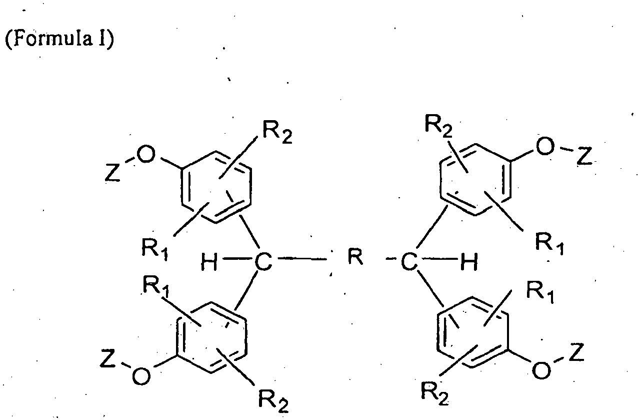 wherein each Z is independently a compound of Formula (II): 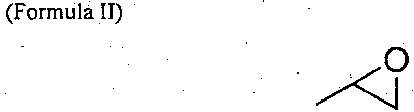 , a compound of Formula (III): 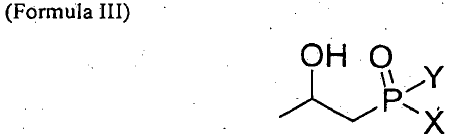 , or a compound of Formula (IV): 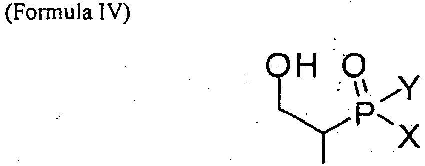 wherein:
each R₁ and R₂ is independently hydrogen or an alkyl moiety;
R in the compound of Formula (I) is a cycloaliphatic diradical, a bicyclic aliphatic diradical, or a tricylic aliphatic diradical having 6 to 30 carbons; and
wherein each Y and X is independently hydrogen, an aliphatic moiety having 1 to 20 carbon atoms or an aromatic hydrocarbon moiety having 6 to 20 carbon atoms.

Embodiments of the present disclosure also include a curable composition formed with the phosphorus-containing epoxy resin. For the various embodiments, the curable compositions can include a phosphorus-content of within a range of from 1 weight percent (wt%) to 4 wt%.

Embodiments of the present disclosure also include a cured epoxy that is formed with the phosphorus-containing epoxy resin. For the various embodiments, the cured epoxy can have a glass transition temperature (Tg) of within a range of 150 degrees Celsius (°C) to 200 °C.

Embodiments of the present disclosure further include a process for making the phosphorus-containing epoxy resin that includes providing an epoxy resin with a functionality of at least 3 by epoxidizing a reaction product of a condensation of phenol and a dialdehyde, and reacting the epoxy resin with a phosphorus compound that contains a phosphorus-hydrogen moiety.

### Detailed Description

Embodiments of the present disclosure include a phosphorus-containing epoxy resin that can be used as, among other things, a self-curing compound and/or as a component in a curable composition to form a cured epoxy. The phosphorus-containing epoxy resin of the present disclosure can also be used with other epoxy resins in curable compositions to increase the thermal resistance (*e.g*., Td and Tg as discussed herein) of the cured epoxies formed with the other epoxy resins.

The phosphorus-containing epoxy resin of the present disclosure also provides the advantage of being halogen free while acting as a flame retardant for a cured epoxy formed in part with the phosphorus-containing epoxy resin. Such cured epoxies formed with the phosphorus-containing epoxy resin can also have suitable thermal and electrical properties useful for electronic applications including electrical laminates, interconnect substrates, build-up films, solder masks, castings, and adhesives.

Specifically, the phosphorus-containing epoxy resin of the present disclosure can provide improvements in thermomechanical properties, such as increasing the glass transition temperature of the cured epoxy.

The improvements of the present disclosure can include increasing the glass transition temperature (Tg) of cured epoxies formed with the phosphorus-containing epoxy resin such that the phosphorus-containing epoxy resin can be used for mid-to-high range applications that undergo temperatures of at least 150 °C, and preferably temperatures of at least 170 °C. In addition, curable compositions formed with the phosphorus-containing epoxy resin of the present disclosure may also provide, in addition to flame resistance, other desired physical properties, such as thermal resistance. One method for measuring thermal resistance is to measure the thermal decomposition temperature (Td) by determining the temperature at which 5 weight percent (wt%) of a cured epoxy degrades as a sample is heated at a fixed rate. Phosphorus-containing epoxy resins of the present disclosure can provide cured epoxy resins with Td's of at least 330 °C.

Additionally, the phosphorus-containing epoxy resins of the present disclosure can have a molar ratio of epoxy to phosphorus that can range from 10 : 1 to 1 : 1, more preferably from 6 : 1 to 2 : 1, and most preferably from 5 : 1 to 3 : 1.

For the various embodiments, such a phosphorus-containing epoxy resin can be represented by a compound of Formula (1): 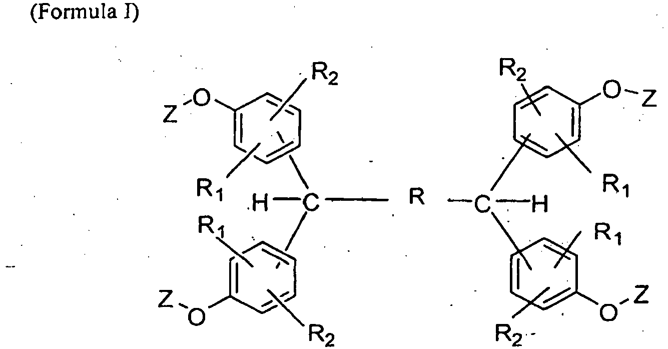 wherein each Z is independently a compound of Formula (II): 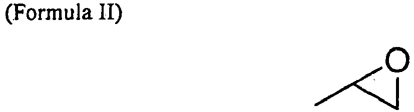 , a compound of Formula (III): 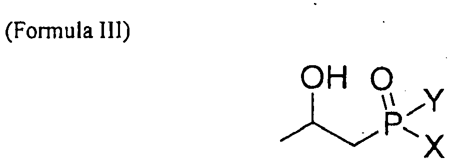 , or a compound of Formula (IV): 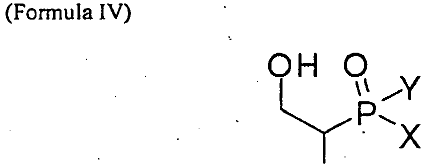 wherein each R₁ and R₂ is independently hydrogen or an alkyl moiety, R is a cycloaliphatic diradical, a bicyclic aliphatic diradical, or a tricyclic aliphatic diradical that contains from 6 to 30 carbons, and each Y and X is independently hydrogen, an aliphatic moiety having 1 to 20 carbon atoms, or an aromatic hydrocarbon moiety having 6 to 20 carbon atoms. For the various embodiments, the phosphorus-containing epoxy resin can be formed by reacting a phosphorus compound containing a phosphorus-hydrogen moiety and an epoxy resin.

For the embodiments, examples of the phosphorus compound containing a phosphorus-hydrogen moiety include, but are not limited to, 9,10-dihydro-9-oxa-10-phosphaphenanthrene-10-oxide (DOPO); 1,3,2-dioxaphosphorinane; 2-hydroxy-5,5-dimethyl-; 1,3,2-dioxaphosphorinane; 1,3,2-dioxaphospholane; 1,3,2-dioxaphospholane; 2-oxide; 5,5-dimethyl-; 1,3,2-benzodioxaphosphole; 2-oxide; 1,3,2-benzodioxaphosphole; 1,3,2-diazaphospholidine; 1,3-dimethyl-; 1,3,2-diazaphospholidine; 1,3-dimethyl- and 2-oxide. For the embodiments, DOPO is the preferred phosphorus compound used in the present disclosure.

For the embodiments, R₁ and R₂ can be alkyl moieties that are saturated linear or branched monovalent hydrocarbon groups optionally containing oxygen. For the embodiments, the alkyl moieties can include carbon atoms within a range of from 1 to 20, preferably within a range of from 1 to 4. Examples of alkyl moieties include, but are not limited to, methyl, ethyl, propyl, isopropyl, n-butyl, isobutyl, sec-butyl, and tert-butyl, and methoxy, ethoxy, propoxy, isopropoxy, n-butoxy, isobutoxy, sec-butoxy, tert-butoxy, methoxymethyl, ethoxymethyl, iso-propoxymethyl, and butoxymethyl.

For the embodiments, examples of the cycloaliphatic diradicals, bicyclic aliphatic diradicals, and tricyclic aliphatic diradicals for R include, but are not limited to, a compound of Formula (A): 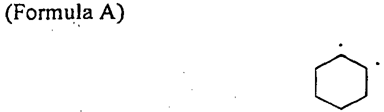 a compound of Formula (B): 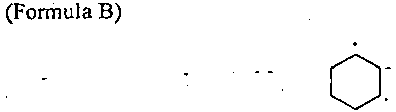 a compound of Formula (C): 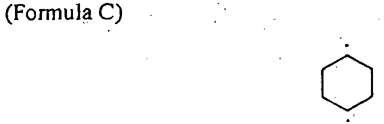 a compound of Formula (D): 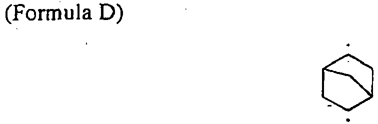 a compound of Formula (E): 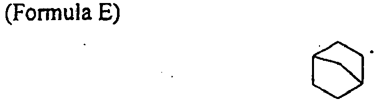 a compound of Formula (F): 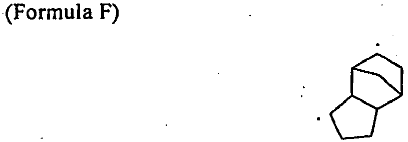 a compound of Formula (G): 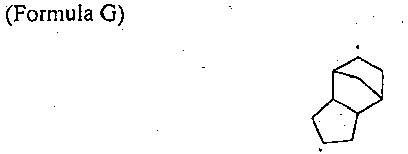 a compound of Formula (H): 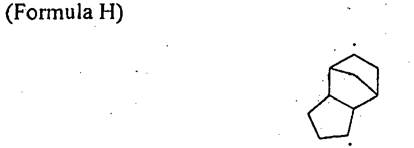 a compound of Formula (I): 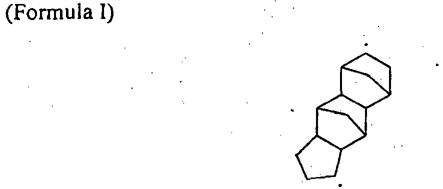 a compound of Formula (J): 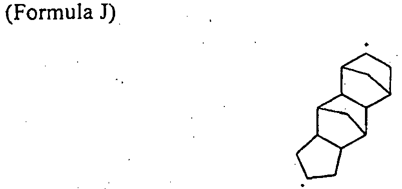 a compound of Formula (K): 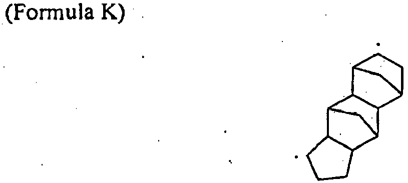 a compound of Formula (L): 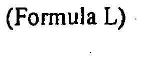 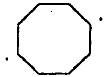 a compound of Formula (M): 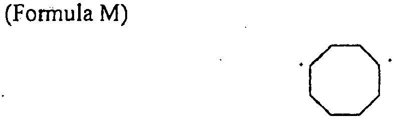 and mixtures thereof. For the embodiments, R is preferably a mixture of 1,3- and 1,4-cyclohexylidene (*e.g*., compounds of Formulas (B) and (C)) or a mixture of bicyclic C₁₀H₁₄ diradicals (*e.g*., compounds of Formulas (F), (G) and (H)) and can be prepared by one of two conversion pathways. The first pathway is hydroformylation of dienes which proceeds in two steps whereby an olefin-aldehyde is formed in the first step followed by formation of a dialdehyde. The second pathway is to form the olefin-aldehyde by a Diels-Alder reaction of acrolein with a diene followed by hydroformylation as shown in one specific example below.

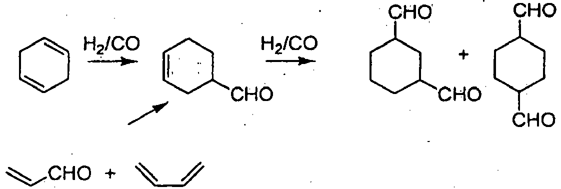

As can be recognized by those skilled in the art, these hydroformylations give a mixture of isomers of the dialdehydes. The dialdehydes can then be converted by a condensation reaction with phenols to the compounds of Formula I where Z is hydrogen.

Examples of X and Y in the compound of Formula III and the compound of Formula IV can include, but are not limited to, hydroxy, methyl, methoxy, ethyl, ethoxy, propyl, propoxy, phenyl, phenoxy, -SH, thiomethyl, thioethyl, and thiophenyl. For the embodiments, X and Y can also be derived from DOPO.

For the embodiments, the phosphorus-containing epoxy resin is formed by reacting a phosphorus compound that contains a phosphorus-hydrogen moiety, e.g., DOPO, with an epoxy resin with a functionality of at least 3 by epoxidizing a reaction product of the condensation of phenol and the dialdehyde. For the embodiments, the epoxy resin formed by epoxidizing the reaction product of the condensation of phenol and the dialdehyde preferably has a polydispersity (Mw/Mn; Mw equals weight average molecular weight and Mn equals number average molecular weight) that is no greater than 2, preferably not higher than about 1.8, more preferably not higher than 1.5, and most preferably not higher than 1.3. The average number of hydroxyl groups per molecule of the reaction products can be within a range of from 4.0 to 6.0, preferably within a range of from 4.5 to 5.0.

For the embodiments, the dialdehydes that can be used in the condensation include, but are not limited to, dialdehydes of a cycloalkane having carbon atoms within a range of from 5 to 24, more preferably within a range of from 6 to 20, and most preferably within a range of from 6 to 15. Examples include, but are not limited to, dialdehydes of cyclohexane, cyclooctane, cyclododecane, norbornane, octahydro-4,7-methano-1H-indene (saturated dicyclopentadiene), dodecahydro-4,9:5,8-dimethano-1H-benz[f]indene (saturated tricyclopentadiene). For example, the condensation can include condensing cyclohexane dicarboxaldehyde with phenol. For the embodiments, the cycloalkane dicarboxaldehyde may comprise one or more isomers (including regioisomers and stereoisomers) of a specific dicarboxaldehyde. For example, in the case of cyclohexane dicarboxaldehyde isomers, one or more of cis-cyclohexane-1,3-dicarboxaldehyde, trans-cyclohexane-1,3-dicarboxaldehyde, cis-cyclohexane-1,4-dicarboxaldehyde and trans-cyclohexane-1,4-dicarboxaldehyde may be employed. However, it is also possible to employ cis and/or trans-cyclohexane-1,2-dicarboxaldehyde. Additionally, a mixture of two or more dicarboxaldehydes which differ in the number of ring carbon atoms and/or in the presence or absence, number and/or types of ring substituents, *e.g*., a mixture of one or more cyclohexane dicarboxaldehyde isomers and one or more cyclooctane dicarboxaldehyde isomers, may be employed in the process of the present disclosure.

For the embodiments, the condensation produces a reaction product that can include a mixture of polyphenolic compounds. For the embodiments, the reaction product is epoxidized by using processes that include, but are not limited to, reacting with epichlorohydrin to form the polygycidyl ether. For the embodiments, the hydroxy groups on the reaction products are converted into glycidyl ether groups to produce a polygycidyl. The epoxidation produces a polyglycidyl ether having a functionality of within a range of from 4 to 10, more preferably within a range of from 5 to 8, and most preferably within a range of from 6 to 7. For the embodiments, a percentage of hydroxy groups converted into glycidyl ether groups can be at least 90%, preferably at least 95%, more preferably at least 98%, and even more preferably at least 99% or above based on the number of hydroxy groups.

For the embodiments, the phenolic compound used in the condensation can be phenol (unsubstituted). Additionally, the aromatic ring of phenol may include one or more substituent's including, but not limited to, cyano, nitro, hydroxyl, unsubstituted or substituted alkyl having 1 to 6 carbon atoms, unsubstituted or substituted cycloalkyl having carbon atoms within a range of from 5 to 8, unsubstituted or substituted alkoxy having carbon atoms within a range of from 1 to 6, unsubstituted or substituted alkenyl having carbon atoms within a range of from 3 to 6, unsubstituted or substituted alkenyloxy having carbon atoms within a range of from 3 to 6, unsubstituted or substituted aryl having carbon atoms within a range of from 6 to 10 carbon, unsubstituted or substituted aralkyl having carbon atoms within a range of from 2 to 7, unsubstituted or substituted aryloxy having carbon atoms within a range of from 6 to 10, and unsubstituted or substituted aralkoxy having carbon atoms within a range of from 7 to 12. For the embodiments, a molar ratio of the phenolic compound to the cycloalkane dicarboxaldehyde used in the condensation can be within a range of from 4 : 1 to 20 : 1, preferably within a range of from 5 : 1 to 15 : 1, and more preferably within a range of 6 : 1 to 12 : 1.

For the embodiments, the polygycidyl ether is reacted with DOPO yielding the phosphorus-containing epoxy resin of the present disclosure. A portion of the epoxy groups of the polygycidyl ether are replaced with a phosphorus-hydrogen moiety when the polygycidyl ether reacts with the DOPO. As DOPO is introduced, the functionality of epoxy resins will decrease as each molecule of DOPO reacts with an epoxy group, thereby removing that epoxy group for cross linking during curing. Therefore, as the amount of DOPO reacting with epoxy resins increases, the crosslink density of a cured epoxy resin and the glass transition temperature can both decrease. In contrast, the present disclosure reacts a polygycidyl ether having a functionality within a range of from 4 to 10, more preferably within a range of from 6 to 7, with DOPO and can maintain a functionality of greater than 3, allowing the glass transition temperature to increase along with maintaining the crosslink density of the cured epoxy. Thus, the phosphorus-containing epoxy resin of the present disclosure can have an increased glass transition temperature as compared to incumbent novolac-based epoxy resins.

Reacting the polygycidyl ether with a phosphorus compound containing phosphorus-hydrogen moieties forms the phosphorus-containing epoxy resin of the present disclosure and can make it useful in the preparation of flame resistant materials. The phosphorus-containing epoxy resin of the present disclosure can have a phosphorous content within a range of from 2 wt% to 20 wt%, more preferably within a range of from 4 wt% to 15 wt%, and most preferably within a range of from 5 wt% to 15 wt%. The embodiments of the present disclosure can also be useful in other applications requiring flame resistant materials, including semiconductor packaging applications, electrical and electronic applications, and composite applications. In addition, the phosphorus-containing epoxy resin is substantially free of both bromine atoms and of halogen atoms.

For the various embodiments, the reaction of the phosphorus-containing epoxy resin with the phosphorus compound containing the phosphorus-hydrogen moiety, e.g., DOPO, is preferably carried out without the presence of water (generally the water is present in less than 5 wt%, more preferable less than 3 wt%, and most preferable less than 1 wt% based on the total weight of the curable composition) because water may tend to react with the DOPO and cause foaming. Water can be removed using well-known methods such as heating in a stream of dry air or nitrogen, in a vacuum oven, or by azeotropic removal of water using an organic liquid such as hexane or toluene. This can be done either on the DOPO itself or on the mixture before reaction.

The present disclosure also provides curable compositions formed with the phosphorus-containing epoxy resin. The curable compositions of the present disclosure can have a phosphorus content within a range of from 0.5 wt% to 5.0 wt% based on a total weight of the curable composition. The curable compositions of the present disclosure described herein may also optionally make use of at least one curing agent (also referred to as a "hardener") and/or curing accelerator. Examples of suitable curing agents include, but are not limited to, amine-curing agents such as dicyandiamide, diaminodiphenylmethane and diaminodiphenylsulfone, polyamides, polyaminoamides, polyphenols, polymeric thiols, polycarboxylic acids and anhydrides such as phthalic anhydride, tetrahydrophthalic anhydride (THPA), methyl tetrahydrophthalic anhydride (MTHPA), hexahydrophthalic anhydride (HHPA), methyl hexahydrophthalic anhydride (MHHPA), nadic methyl anhydride (NMA), polyazealic polyanhydride, succinic anhydride, and maleic anhydride styrene-maleic anhydride copolymers. Additionally, phenolic curing agents such as phenol novolacs, cresol novolacs, and bisphenol A novolacs may also be used. Curing agents are preferably used in an amount of within a range of from 2 wt% to 80 wt%, based on the total weight of the curable composition.

Curing accelerators (or catalysts) include substituted or epoxy-modified imidazoles such as 2-methylimidazole, 2-phenyl imidazole and 2-ethyl-4-methyl imidazole. Other heterocyclic amines such as 1,8-diazabicyclo[5.4.0]undec-7-ene (also known as DBU) and 1,5-diazabicyclo[4.3.0]non-5-ene (also known as DBN) may also be used. Tertiary amines and phosphines including, but not limited to, triethylamine, tripropylamine, tributylamine, and triphenyl phosphine may also be used. Additionally, phosphonium salts such as ethyltriphenylphosphonium acetate, ethyltriphenylphosphonium acetate and ammonium salts such as benzyltrimethylammonium acetate and benzyltrimethylammonium hydroxide can also be employed as curing accelerators. Halogen salts (iodide, bromide, chloride, and fluoride) are also usable, but are generally less desirable in halogen-free applications. Catalysts are preferably used in an amount of within a range of from 0.05 wt% to about 2.00 wt%, based on the total weight of the curable composition.

For the embodiments, the optimum ratio of the curing agent to the phosphorus-containing epoxy is usually expressed in terms of equivalent ratio. There can be a 1.00 : 1.00 equivalent ratio of epoxy to reactive hydrogen (-SH, -OH, -NH, or -COOH) or anhydride in the curing agent. The curable compositions of the present disclosure are preferably prepared with an equivalent ratio from 1.20: 1.00 to 1.00 : 1.20, more preferably within a range of from 1.10 : 1.00 to 1.00 : 1.10, and most preferably within a range of from 1.10 : 1.00 to 1.00 : 1.05

Generally, curing the curable composition formed with the phosphorus-containing epoxy resin of Formula (I), in accordance with the disclosure, can be carried out by first melting the phosphorus-containing epoxy resin in the curable composition to obtain a homogeneous melt or dissolving it in a suitable solvent. Examples of suitable solvents include, but are not limited to, alcohols such as Dowanol™ PM (The Dow Chemical Company), ketones such as acetone and/or methyl ethyl ketone, esters, and/or aromatic hydrocarbons. For the embodiments, the solvent can be used in an amount up to 50 wt% based on the total weight of the curable composition. The solvent can be removed by distillation or simple evaporation during the course of or at the end of the cure.

For the embodiments of the present disclosure, the curable compositions formed with the phosphorus-containing epoxy resin can also include at least one of a composition component. For the various embodiments, the composition component of the curable composition can either be reactive or non-reactive with the phosphorus-containing epoxy resin of the present disclosure. For the various embodiments, curable compositions formed with the phosphorus-containing epoxy resin and the composition component can be obtained by combining, mixing and then reacting the phosphorus-containing epoxy resin of the present disclosure with the at least one composition component. Examples of such composition components include, but are not limited to, epoxy resins, polyepoxide resins, cyanate esters, dicyanate esters, polycyanate esters, cyanate aromatic esters, maleimide resins, thermoplastics polymers, polyurethanes, polyisocyanates, benzoxazine ring-containing compounds, unsaturated resin systems containing double or triple bonds, and combinations thereof.

In an additional embodiment, the curable compositions of the present disclosure can be formed with the phosphorus-containing epoxy resin of the present disclosure and at least one reactive and/or non-reactive thermoplastic resin. Examples of such thermoplastic resins include, but are not limited to, polyphenylene oxide, polyphenylsulfones, polysulfones, polyethersulfones, polyvinylidene fluoride, polyetherimide, polypthalimide, polybenzimidiazole, acyrlics, phenoxy, and combinations or blends thereof.

For the various embodiments, the phosphorus-containing epoxy resin of the present disclosure can be mixed with thermoplastic resin to form a hybrid crosslink network. Preparation of the curable compositions of the present disclosure can be accomplished by suitable mixing means known in the art, including dry blending the individual components and subsequently melt mixing, either directly in the extruder used to make the finished article or pre-mixing in a separate extruder.

When softened or melted by the application of heat, the curable composition formed with the phosphorus-containing epoxy resin of the present disclosure and the thermoplastic resin can be formed or molded using conventional techniques such as compression molding, injection molding, gas assisted injection molding, calendaring, vacuum forming, thermoforming, extrusion and/or blow molding, alone or in combination. The curable composition formed with the phosphorus-containing epoxy resin of the present disclosure and the thermoplastic resin may also be formed, spun, or drawn into films, fibers, multi-layer laminates or extruded sheets, or can be compounded with one or more organic or inorganic substances.

For the various embodiments, the phosphorus-containing epoxy resin can be used in combination with other epoxy resins in curable compositions to increase the thermal resistance of cured epoxies formed from the other epoxy resins. The other epoxy resins used may include at least one epoxy resin and/or polyepoxide resin, where combinations of one or more of the epoxy resins and one or more of the polyepoxide resins are possible. Examples of such epoxy resins include, but are not limited to, those selected from halogen-free epoxies, phosphorus-free epoxies, brominated epoxies, and phosphorus-containing epoxies and mixtures thereof, epoxy functional polyoxazolidone containing compounds, cycloaliphatic epoxies, glycidyl methacrylate/styrene copolymers, and the reaction product of liquid epoxy resins and tetrabromo bisphenol A resins. Additionally, glycidyl ethers of: phenol novolacs, cresol novolacs, "trisphenol" (tris-4-hydroxybenzene methane), bisphenol A novolacs, dicyclopentadiene bisphenol, 1,1,2,2-tetraphenolethane, hydroquinone, resorcinol, catechol; bisphenol, bisphenol-A, bisphenol AP (1,1-bis(4-hydroxylphenyl)-1-phenyl ethane), bisphenol F, bisphenol K, tetrabromobisphenol A, phenolhydroxybenzaldehyde resins, cresol-hydroxybenzaldehyde novolac, dicyclopentadiene-dimethylphenol novolac, and combinations thereof may be used.

A Lewis acid may also be employed in the compositions that include an epoxy resin. The Lewis acid may include, for example, one or a mixture of two or more halides, oxides, hydroxides and alkoxides of zinc, tin, titanium, cobalt, manganese, iron, silicon, aluminum, and boron. Examples of such Lewis acids, and anhydrides of Lewis acids include boric acid, metaboric acid, optionally substituted boroxines (such as trimethoxy boroxine, trimethyl boroxine or triethyl boroxine), optionally substituted oxides of boron, alkyl borates, boron halides, zinc halides (such as zinc chloride) and other Lewis acids that tend to have a relatively weak conjugate base.

The phosphorus-containing epoxy resin and/or curable compositions formed with the phosphorus-containing epoxy resin may be useful in the preparation of various articles of manufacture. Thus, the disclosure also includes prepregs of the above composition as well as shaped articles, reinforced compositions, laminates, electrical laminates, coating, molded articles, adhesives, composite products as hereinafter described from cured or partially cured phosphorus-containing epoxy resin or compositions that include the phosphorus-containing epoxy resin of the disclosure. In addition, the compositions of the disclosure can be used for various purposes in the form of a dried powder, pellets, a homogeneous mass, impregnated products and/or compounds.

A variety of additional additives may be added to the curable composition of the present disclosure. Examples of these additional additives include fibrous reinforcement, fillers, pigments, dyes, thickening agents, wetting agents, lubricants, flame-retardants and the like. Suitable fibrous and/or particulate reinforcing materials include silica, alumina trihydrate, aluminum oxide, aluminum hydroxide oxide, metal oxides, nano tubes, glass fibers, quartz fibers, carbon fibers, boron fibers, Kevlar fibers and Teflon fibers, among others. A size range for the fibrous and/or particulate reinforcing materials can include 0.5 nanometer (nm) to 100 µm. For the various embodiments, the fibrous reinforcing materials can come in the form of a mat, cloth or continuous fibers.

Embodiments of the curable compositions may also include at least one of a synergist to help improve the flame-out ability of the cured composition. Examples of such synergists include, but are not limited to, aluminum hydroxide, magnesium hydroxide, zinc borate, metal phosphinates such as Exolit® OP-930 (available from Clariant), and combinations thereof. In addition, embodiments of the curable compositions may also include adhesion promoters, such as modified organosilanes (epoxidized, methacryl, amino), acetylacetonates, sulfur-containing molecules and combinations thereof. Other additives can include, but are not limited to, wetting and dispersing aids such as modified organosilanes, Byk® 900 series and W 9010 (Byk-Chemie GmbH), modified fluorocarbons and combinations thereof; air release additives such as Byk® A530, Byk® A525, Byk® A555, and Byk® A 560 (Byk-Chemie GmbH); surface modifiers such as slip and gloss additives; mold release agents such as waxes; and other functional additives or prereacted products to improve polymer properties such as isocyanates, isocyanurates, cyanate esters, allyl containing molecules or other ethylenically unsaturated compounds, acrylates and combinations thereof.

For the various embodiments, a resin sheet can be formed from the phosphorus-containing epoxy resin and/or curable compositions of the present disclosure. In one embodiment, a plurality of sheets can be bonded together to form a laminated board, where the sheets comprise at least one of the resin sheet. The phosphorus-containing epoxy resin and/or curable compositions formed with the phosphorus-containing epoxy resin can also be used to form a resin clad metal foil. For example, a metal foil, such as a copper foil, can be coated with the phosphorus-containing epoxy resin and/or curable compositions formed with the phosphorus-containing epoxy resin of the present disclosure. The various embodiments also include a multi layer board that can be prepared by coating a laminated substrate with the phosphorus-containing epoxy resin and/or compositions of the present disclosure.

For the various embodiments, the phosphorus-containing epoxy resin and/or curable compositions of the present disclosure can be applied to a substrate as a coating or adhesive layer. Alternatively, the phosphorus-containing epoxy resin and/or compositions of the present disclosure can be molded or laminated in the form of a powder, a pellet or impregnated in a substrate such as a fibrous reinforcement. The phosphorus-containing epoxy resin and/or curable compositions of the present disclosure can then be cured by the application of heat.

The heat necessary to provide the proper curing conditions can depend on the proportion of composition components constituting the curable composition and the nature of the composition components employed. In general, the curable composition of this disclosure may be cured by heating it at a temperature within the range of 25 °C to 250 °C, preferably 100 °C to 200 °C, although differing according to the presence of a curing agent or its amount, or the types of the composition components in the curable composition. The time required for heating can be 60 seconds to 24 hours, where the exact time wil differ according to whether the curable composition is used as a thin coating or as molded articles of relatively large thickness or as laminates or as matrix resins for fiber reinforced composites, particularly for electrical and electronic applications, *e.g*., when applied to an electrically nonconductive material and subsequently curing the curable composition.

### EXAMPLES

The following examples are given to illustrate, but not limit, the scope of this disclosure.

### Materials

Phenol, available from the Dow Chemical Company.
Cyclohexane dicarboxaldehyde, prepared as described in WO2001007382, which is incorporated herein by reference in its entirety.
UV-dye, Durite® SD-357B (tetraphenolethane), available from Hexion.
*p*-toluenesulfonic acid (PTSA) (0.207% by weight), available from Sigma Aldrich.
Boric acid, technical grade, (CAS# 10043-35-3), available from Sigma Aldrich
Methyl ethyl ketone (MEK), technical grade, available from The Dow Chemical Company.
9,10-dihydo-9-oxa-10-phosphaphenethrene-10-oxide (DOPO), available from Schill and Seilacher.
Catalyst, ethyltriphenylphosphonium acetate (CAS # 35835-94-0) (diluted to 70% solids in methanol), available from Alfa Aesar.
Curing agent, Rezicure™ 3026, available from SI Group.
Curing agent, Dowanol™ PM, available from The Dow Chemical Company.
Solvent, Dowanol™ PMA, available from The Dow Chemical Company.
Solvent, 2-methylimidazole (20 wt% in methanol), available from Sigma Aldrich.
Sodium bicarbonate (NaHCO), technical grade, available from Sigma Aldrich.
Epoxy Resin, XZ92530, available from The Dow Chemical Company.

### Test Methods

### Glass Transition Temperature (Tg)

The glass transition temperature was measured on a Q200 Differential Scanning Calorimeter from TA Instruments (New Castle, DE). The temperature of the sample was increased 10 °C per minute from 30 °C to 220 °C. Tg1 is reported as the temperature at which the mid-point of the first-order transition is observed on the first temperature ramp. The temperature was maintained constant at 220 °C for 15 minute and then allowed to equilibrate at 30 °C. Again, the temperature of the sample was increased 10 °C per minute from 30 °C to 220 °C. Tg2 is reported as the mid-point temperature of the first-order transition. The temperature was maintained constant at 220 °C for 15 minute and then allowed to equilibrate at 30 °C. The temperature of the sample was increased 20 °C per minute from 30 °C to 220 °C. Tg3 is reported as the mid-point temperature of the first-order transition.

### Thermal Decomposition Temperature (Td)

The Td was measured on a Q5000 TGA from TA instruments (New Castle, DE). The Td is reported as the temperature at which 5 wt% of the sample mass has degrades.

### Epoxy Equivalent Weight (EEW)

The EEW was determined according to ASTM D1652-04 entitled "Standard Test Method for Epoxy Content of Epoxy Resins."

### UL-94 Vertical Flame Test

A 5 centimeter (cm) long x 1 cm wide x 1.5 millimeter (mm) thick 8-ply laminate sample is made and conditioned in a 105°C oven for 8 hours prior to analysis. The sample is supported in a vertical position and a flame is applied to the bottom of the sample. A first flame is applied for ten seconds and then removed until flaming stops at which time a second flame is reapplied for another ten seconds and then removed. Five samples are made and tested. The results are reported as a 1^{st} Burn Time and a 2^{nd} Burn Time and a UL94 rating is determined. The 1^{st} Burn Time is the time (in seconds) it takes for the flaming to stop after the first flame has been removed. Similarly, the 2^{nd} Burn Time is the time (in seconds) it takes for the flaming to stop after the second flame has been removed.

### Examples

### Formation of Reaction Products by Condensation of Phenol and Cyclohexane Dicarboxaldehyde

Phenol (598 grams (g), 6.36 moles (mol)) and cyclohexane dicarboxaldehyde (74.2 g, 0.53 mol, mixture of 1,3- and 1,4-isomers; ratio of phenolic groups to aldehyde groups equal 6 : 1, equivalent ratio of phenol to cyclohexane dicarboxaldehyde equal 3 : 1) were added together in a 1 liter (L) 5-neck reactor. The mixture was agitated at 500 revolutions per minute (rpm) with a mechanical stirrer and heated to 50 °C. At 50 °C and atmospheric pressure, *p*-toluenesulfonic acid (PTSA) (1.3959 g total, 0.207 wt%) was added in six portions over 30 minutes. The temperature increased a few degrees with each PTSA addition. After the 6^{th} PTSA addition, the temperature controller was set to 70 °C and vacuum was applied to the reactor. The pressure of the reactor was gradually decreased to remove water from the reaction solution. Once the reflux stopped, the reactor was vented and water (48 g) was added. Water (79.0 g) and sodium bicarbonate (NaHCO₃, 0.6212 g) were added to neutralize the PTSA. When the reaction contents had cooled to room temperature, the entire contents was transferred to a 2-L separatory funnel. Methyl ethyl ketone (500 milliliter (ml)) was added to the 2-L separatory funnel, and the contents were washed several times with water to remove PTSA-salt. The solvents and excess phenol were removed using a rotary evaporator, and the reaction product was poured onto aluminum foil. Ultraviolet spectrophotometric analysis provided a hydroxyl equivalent weight (HEW) of 118.64.

### Preparation of the Polygycidyl Ether by Epoxidation of Reaction Product

The reaction products formed above (107.5 g, 0.22 mol based on the assumption of 100 % tetraphenol of the above structure), epichlorohydrin (414.08 g, 4.51 mol; ratio of epoxy groups to phenolic groups equal equivalent ratio of epichlorohydrin to polyphenolic compounds equal 5.1 : 1.0) and Dowanol® PM (79.4 g, 12.7 wt%) were added to a 1.5-L 5-neck reactor. The resulting solution was heated to 65 °C while being agitated at 650 rpm. Upon reaching 65 °C, vacuum (28.5 kilopascal (kPa)) was applied to the reactor and 50 wt% aqueous NaOH (72.9 g) was added to the reaction mixture over a period of 4 hours. Upon completion of the addition, the reaction mixture was kept for an extra 15 minutes at 65 °C and then the entire reactor content was filtered to remove by-product salt. The filtrate was transferred to a 2-L separatory funnel, methyl ethyl ketone was added to the filtrate and the resultant mixture was extracted several times with water to remove residual salt. Thereafter, the washed solution was concentrated on a rotary evaporator to remove unreacted epichlorohydrin.

### Preparation of the Phosphorus-Containing Epoxy Resin (3.0 wt% phosphorus) by Reacting Polygycidyl Ether with DOPO

The polygycidyl ether (88.79 g) was added to a 250 ml round bottom flask equipped with condenser, mechanical stirrer, and thermocouple and heated to 120 °C under a nitrogen purge at 50 cubic centimeters per minute (cc/min) flow rate. Upon melting, the temperature was increased to 125 °C and Durite® SD-357B (1.39 g) was added and allowed to stir for 30 minutes. The reaction mixture was allows to cool to 110 °C, and 9,10-dihydo-9-oxa-10-phosphenanthrene-10-oxide (DOPO, 12.3 g) was added and allowed to stir until completely homogeneous. A-1 catalyst (125 milligrams (mg)) was then added and the temperature was increased to and maintained at 170 °C for 30 minutes. After 30 minutes, another 12.3 g of DOP was added and stirred until completely homogeneous. The reaction mixture was then stirred for 30 minutes after the homogeneous mixture formed.

### Preparation of the Phosphorus-Containing Epoxy Resin (2.7 wt% phosphorus) by Reacting Polygycidyl Ether with DOPO

The procedure from the preparation of the phosphorus-containing epoxy resin (3.0 wt% phosphorus) was repeated but with the following changes: use 21.4 g of DOPO.

### Preparation of the Phosphorus-Containing Epoxy Resin (3.7 wt% phosphorus) by Reacting Polygycidyl Ether with DOPO

The procedure from the preparation of the phosphorus-containing epoxy resin (3.0 wt% phosphorus) was repeated but with the following changes: use 31.2 g of DOPO.

### Preparation of Examples 1 to 11

Examples 1 to 11 were prepared by forming the following curable compositions in Table 1. The phosphorus-containing epoxy resin (192.69 g) was added to a container capable of holding such an amount. A 50 wt% solution of Rezicure™ 3026 in Dowanol™ PMA (53.6 g) and a 20 wt% solution of 2-methylimidazole in methanol were added to the container holding the phosphorus-containing epoxy resin. The amounts provided in Table 1 are a "percent solids basis" meaning that the weight of the solvent (Dowanol™ PMA) of Rezicure ™ 3026 and the solution of 2-methylimidazole in methanol are ignored in the calculations.

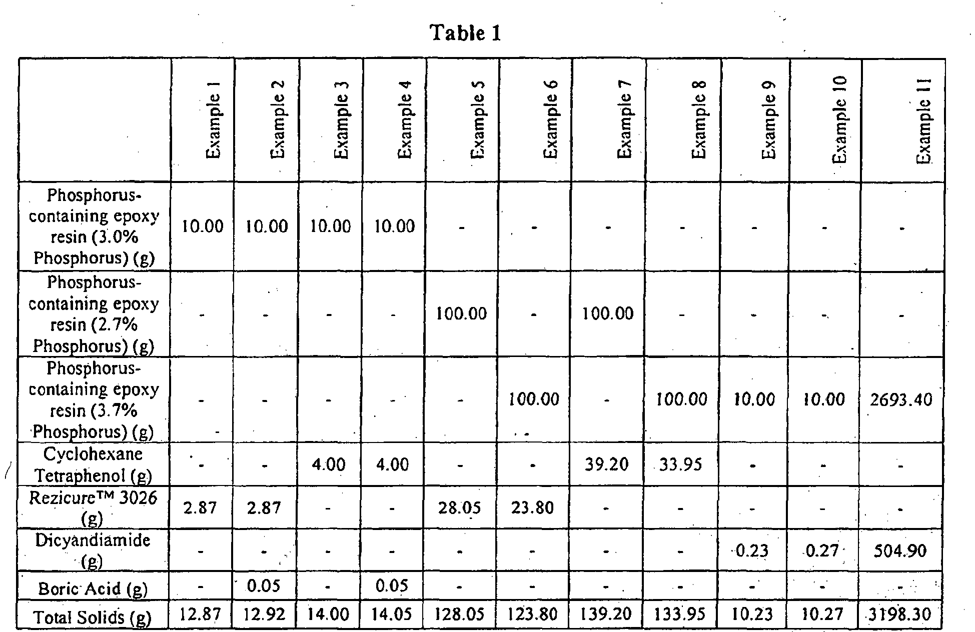

The compositions of Example 1-10, were formed and agitated for 2 hours before being applied to woven glass forming hand paint samples. The hand paint samples were then partially cured by subjecting them to a 170 °C oven for a sufficient amount of time to reduce the reactivity of the curing agent to 80 seconds. The resulting "B-staged" prepregs were cut into 12 inch by 12 inch squares. Eight sheets of the prepreg were stacked and pressed forming laminate samples at a temperature of 200 °C and a pressure of greater than 23 atmospheres (atm) (2330 kPa) for a period of greater than 90 minutes. Example 11 was scaled to pilot plant scale on a Litzler Treater and formed into a laminate sample. The thermal properties of the laminate samples for Examples 1-11 were analyzed and shown in Table 2.

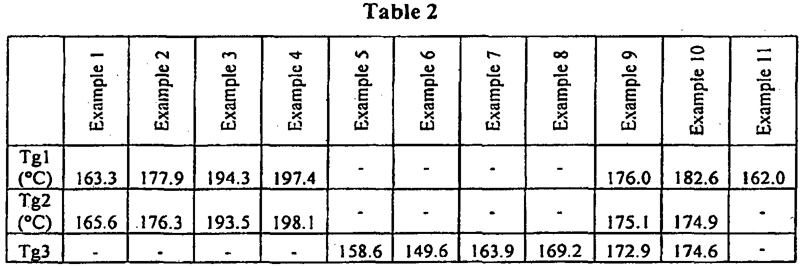

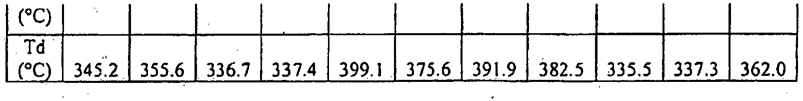

### Preparation of Comparative Examples A to C

Comparative Examples A to C were made by forming curable compositions with an epoxy resin (XZ92530) and hardeners. The formulations and amounts illustrated in Table 3 are based on a percent solids basis.

**Table 3**

| | Comparative Example A | Comparative Example B | Comparative Example C |
|---|---|---|---|
| XZ92530 (g) | 10.00 | 10.00 | 10.00 |
| - Rezicure™ 3026 (g) | 2.87 | 2.87 | - |
| Dicyandiamide (g) | - | - | 0.31 |
| Boric Acid (g) | - | 0.05 | - |
| Total Solids (g) | 12.87 | 12.92 | 10.31 |

The curable compositions of Comparative Examples A - C, were formulated and agitated for 2 hours before being applied to woven glass forming hand paint samples. The hand paint samples were then partially cured by subjecting them to a 170 °C oven for a sufficient amount of time to reduce the reactivity of the curing agent to 80 seconds. The resulting "B-staged" prepregs were cut into 12 inch by 12 inch squares. Eight sheets of the prepreg were stacked and pressed forming laminate samples at a temperature of 200 °C and a pressure of greater than 23 atmospheres (atm) (2330 kPa) for a period of greater than 90 minutes. The thermal properties of the laminate samples for Comparative Examples A-C were analyzed and shown in Table 4.

**Table 4**

| | Comparative Example A | Comparative Example B | Comparative Example C |
|---|---|---|---|
| Tg1 (°C) | 139.6 | 122.9 | 119.9 |
| Tg2 (°C) | 142.9 | 121.4 | 118.8 |
| Tg3 (°C) | - | - | 122.7 |
| Td (°C) | 357.7 | 356.3 | 339.6 |

### Analysis of Thermal Properties

It can be seen from comparing Table 2 (Examples 1-11) with Table 4 (Comparative Examples A-C) that the sample laminates formed from the phosphorus-containing epoxy resin of the present disclosure yield significantly higher Tg values. For example, Examples 1-4 yield a Tg of at least 20 °C higher than the Comparative Examples A and B and Examples 9 and 10 yield a Tg of at least 50 °C higher than the Comparative Example C. Additionally, the thermal decomposition temperature (Td) values between the Examples and Comparative Examples remain essentially unchanged.

### UL-94 Flame Test

Five runs were performed with the laminate samples for Examples 5 - 8. Each Example was tested and the 1^{st} Burn Time (in seconds), 2^{nd} Burn Time (in seconds) and the UL-94 rating are shown in Table 5.

**Table 5**

| | Example 5 | | Example 6 | | Example 7 | | Example 8 | |
|---|---|---|---|---|---|---|---|---|
| | 1^{st} Burn Time (s) | 2^{nd} Burn Time (s) | 1^{st} Burn Time (s) | 2^{nd} Burn Time (s) | 1^{st} Burn Time (s) | 2^{nd} Burn Time (s) | 1^{st} Burn Time (s) | 2^{nd} Burn Time (s) |
| Run 1 | 9.5 | 11.0 | 7.4 | 6.5 | 19.6 | 0.0 | 8.6 | 0.0 |
| Run 2 | 13.1 | 0.0 | 6.9 | 5.7 | 14.5 | 0.0 | 17.7 | 0.0 |
| Run 3 | 11.0 | 5.3 | 8.6 | 6.3 | 19.4 | 0.0 | 6.7 | 13.9 |
| Run 4 | 8.1 | 7.3 | 7.7 | 6.2 | 22.5 | 0.0 | 14.4 | 0.0 |
| Run 5 | 7.8 | 11.6 | 6.4 | 5.6 | 17.8 | 4.0 | 14.3 | 1.7 |
| UL 94 Rating | V-1 | | V-1 | | V-1 | | V-1 | |

As seen in Table 5, each run for the laminate samples for Examples 5 - 8 resulted in a UL 94 rating of V-1. Without a flame retardant, these samples would "bum to the clamp" after the first exposure to the flame and is designated as "unrated." The V-1 rating for Examples 5 through 8 indicates that the flame retardant such as phosphorus is active. In addition, the V-1 rating is acceptable for some applications in some countries.

The laminate sample prepared from Example 11 (1.3-1.5 mm thick) was also tested under the UL-94 Flame test. The burn times and the UL-94 rating are shown in Table 6.

**Table 6**

| | Example 11 | |
|---|---|---|
| | 1^{st} Burn Time (s) | 2^{nd} Burn Time (s) |
| Run 1 | 1.8 | 4.9 |
| Run 2 | 0.6 | 1.2 |
| Run 3 | 1.0 | 0.9 |
| Run 4 | 1.1 | 2.4 |
| Run 5 | 3.3 | 1.5 |
| Total Burn Time | 7.8 | 10.9 |
| 1^{st} Burn + 2^{nd} Burn Time | 18.7 | |
| UL94 Rating | V-0 | |

The results for Example 11 are significantly better (indicated by shorter burn times), and the samples achieve the more stringent rating of V-0. The V-0 rating is one standard for electronic applications in the United States.

## Claims

1. A phosphorus-containing epoxy resin of a compound of Formula (I): 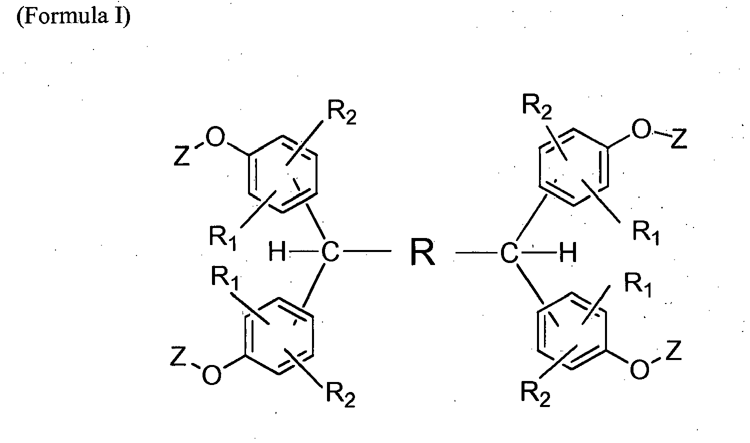 wherein each Z is independently a compound of Formula (II): 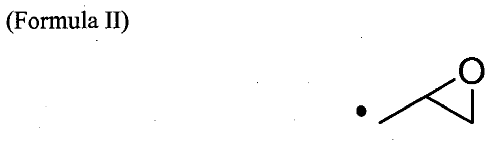 , a compound of Formula (III): 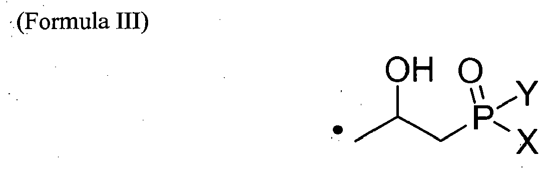 , or a compound of Formula (IV): 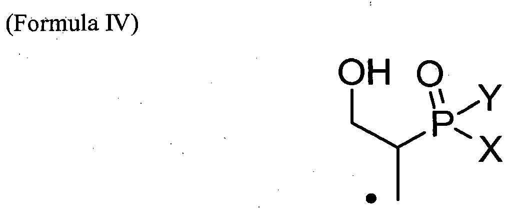 wherein:
each R₁ and R₂ is independently hydrogen or an alkyl moiety;
R in the compound of Formula I is a cycloaliphatic diradical, a bicyclic aliphatic diradical, or a tricyclic aliphatic diradical having 6 to 30 carbons; and
each Y and X is independently hydrogen, an aliphatic moiety having 1 to 20 carbon atoms or an aromatic hydrocarbon moiety having 6 to 20 carbon atoms.

2. The phosphorus-containing epoxy resin of claim 1, wherein R in the compound of Formula (I) is a mixture of 1,3- and 1,4-cyclohexylidene.

3. The phosphorus-containing epoxy resin of claim 1, wherein R in the compound of Formula (I) is a mixture of bicyclic C₁₀H₁₄ diradicals.

4. The phosphorus-containing epoxy resin of claim 1, wherein Y for the compound of Formula (III) and the compound of Formula (IV) is 2-biphenyl-2'-oxy, forming a tricyclic structure.

5. The phosphorus-containing epoxy resin of claim 1, wherein X in the compound of Formula (III) and the compound of Formula (IV) is methoxy.

6. The phosphorus-containing epoxy resin of claim 1, having a phosphorus content within a range of from 2 weight percent to 20 weight percent based on a total weight of the phosphorus-containing epoxy resin.

7. The phosphorus-containing epoxy resin of claim 1, wherein the phosphorus-containing epoxy resin has a molar ratio of epoxy to phosphorus within a range of from 10 : 1 to 1 : 1.

8. A curable composition, comprising the phosphorus-containing epoxy resin of claims 1-7.

9. The curable composition of claim 8, wherein the curable composition has a phosphorus content within a range of from 0.5 weight percent to 5 weight percent based on a total weight of the curable composition.

10. A cured epoxy, formed with the phosphorus-containing epoxy resin of any one of claims 1-7.

11. The cured epoxy of claim 10, wherein the cured epoxy has a glass transition temperature of within a range of from 150 degrees Celsius to 200 degrees Celsius.

12. A process for making the phosphorus-containing epoxy resin, comprising:
providing a polyglycidyl ether with a functionality at least 4 by epoxidizing a reaction product of a condensation of phenol and a dialdehyde; and
reacting the polyglycidyl ether with a phosphorus compound that contains a phosphorus-hydrogen moiety.

13. The process of claim 12, where the epoxy resin has a polydispersity of less than 2.0.

14. The process of claim 12, where the dialdehyde is cycloalkane dicarboxaldehyde.

15. The process of claim 12, where the phosphorus compound is 9,10-dihydo-9-oxa-10-phosphaphenanthrene-10-oxide.

## Patentansprüche

1. Ein phosphorhaltiges Epoxidharz einer Verbindung der Formel (I): 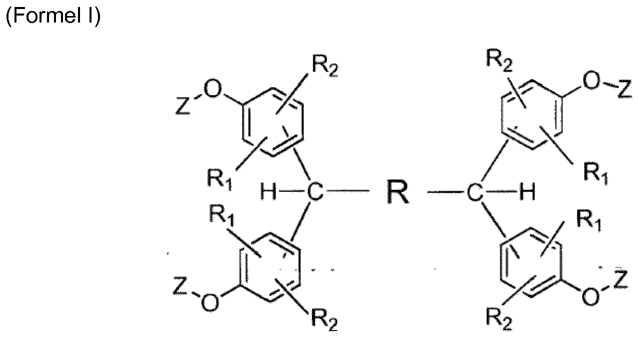 wobei jedes Z unabhängig eine Verbindung der Formel (II) ist: 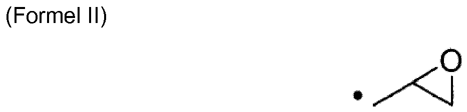 eine Verbindung der Formel (III) ist: 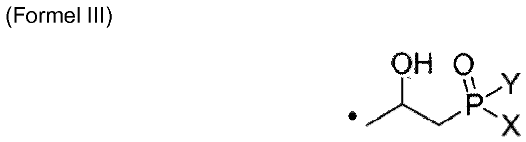 oder eine Verbindung der Formel (IV) ist: 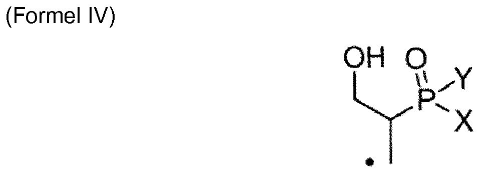 wobei:
jeder R₁ und R₂ unabhängig Wasserstoff oder ein Alkylanteil ist;
R in der Verbindung der Formel I ein cycloaliphatisches Diradikal, ein bicyclisches aliphatisches Diradikal oder ein tricyclisches aliphatisches Diradikal mit 6 bis 30 Kohlenstoffen ist; und
jedes Y und X unabhängig Wasserstoff, ein aliphatischer Anteil mit 1 bis 20 Kohlenstoffatomen oder ein aromatischer Kohlenwasserstoffanteil mit 6 bis 20 Kohlenstoffatomen ist.

2. Phosphorhaltiges Epoxidharz gemäß Anspruch 1, wobei R in der Verbindung der Formel (I) eine Mischung von 1,3- und 1,4-Cyclohexyliden ist.

3. Phosphorhaltiges Epoxidharz gemäß Anspruch 1, wobei R in der Verbindung der Formel (I) eine Mischung von bicyclischen C₁₀H₁₄-Diradikalen ist.

4. Phosphorhaltiges Epoxidharz gemäß Anspruch 1, wobei Y für die Verbindung der Formel (III) und die Verbindung der Formel (IV) 2-Biphenyl-2'-oxy ist, wobei eine tricyclische Struktur gebildet wird.

5. Phosphorhaltiges Epoxidharz gemäß Anspruch 1, wobei X in der Verbindung der Formel (III) und der Verbindung der Formel (IV) Methoxy ist.

6. Phosphorhaltiges Epoxidharz gemäß Anspruch 1, das einen Phosphorgehalt innerhalb eines Bereichs von 2 Gewichtsprozent bis 20 Gewichtsprozent, bezogen auf ein Gesamtgewicht des phosphorhaltigen Epoxidharzes, aufweist.

7. Phosphorhaltiges Epoxidharz gemäß Anspruch 1, wobei das phosphorhaltige Epoxidharz ein Molverhältnis von Epoxid zu Phosphor innerhalb eines Bereichs von 10 : 1 bis 1 : 1 aufweist.

8. Eine aushärtbare Zusammensetzung, die das phosphorhaltige Epoxidharz gemäß den Ansprüchen 1-7 beinhaltet.

9. Aushärtbare Zusammensetzung gemäß Anspruch 8, wobei die aushärtbare Zusammensetzung einen Phosphorgehalt innerhalb eines Bereichs von 0,5 Gewichtsprozent bis 5 Gewichtsprozent, bezogen auf ein Gesamtgewicht der aushärtbaren Zusammensetzung, aufweist.

10. Ein ausgehärtetes Epoxid, das mit dem phosphorhaltigen Epoxidharz gemäß einem der Ansprüche 1-7 gebildet ist.

11. Ausgehärtetes Epoxid gemäß Anspruch 10, wobei das ausgehärtete Epoxid eine Glasübergangstemperatur innerhalb eines Bereichs von 150 Grad Celsius bis 200 Grad Celsius aufweist.

12. Ein Verfahren zum Herstellen eines phosphorhaltigen Epoxidharzes, das Folgendes beinhaltet:
Bereitstellen eines Polyglycidylethers mit einer Funktionalität von mindestens 4 durch Epoxidieren eines Reaktionsproduktes einer Kondensation von Phenol und einem Dialdehyd; und
Reagierenlassen des Polyglycidylethers mit einer Phosphorverbindung, die einen Phosphorwasserstoffanteil enthält.

13. Verfahren gemäß Anspruch 12, wobei das Epoxidharz eine Polydispersität von weniger als 2,0 aufweist.

14. Verfahren gemäß Anspruch 12, wobei das Dialdehyd Cycloalkandicarboxaldehyd ist.

15. Verfahren gemäß Anspruch 12, wobei die Phosphorverbindung 9,10-Dihydro-9-oxa-10-phosphaphenanthren-10-oxid ist.

## Revendications

1. Une résine époxy contenant du phosphore d'un composé de Formule (I) : 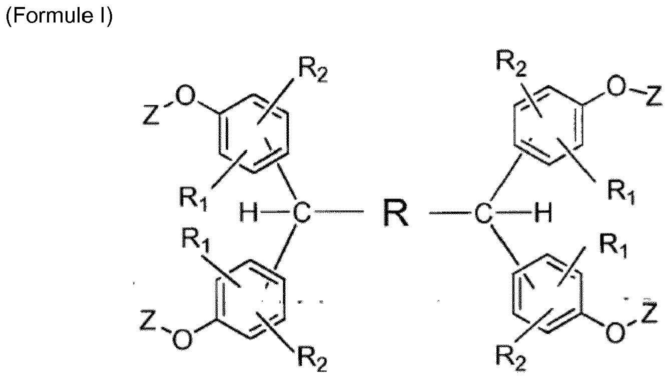 dans laquelle chaque Z est indépendamment un composé de Formule (II) : 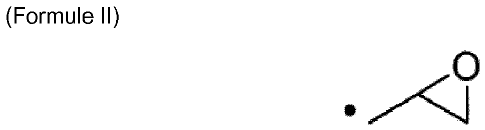 , un composé de Formule (III) : 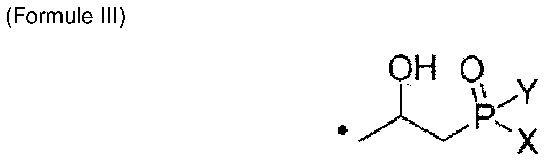 , ou un composé de Formule (IV) : 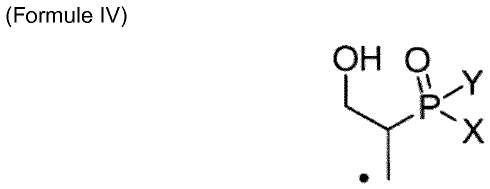 dans laquelle :
chaque R₁ et R₂ sont indépendamment l'hydrogène ou un groupement alkyle ;
R dans le composé de Formule I est un diradical cycloaliphatique, un diradical aliphatique bicyclique ou un diradical aliphatique tricyclique ayant 6 à 30 carbones ; et
chaque Y et X sont indépendamment l'hydrogène, un groupement aliphatique ayant 1 à 20 atomes de carbone ou un groupement hydrocarbure aromatique ayant 6 à 20 atomes de carbone.

2. La résine époxy contenant du phosphore de la revendication 1, dans laquelle R dans le composé de Formule (I) est un mélange de 1,3- et 1,4-cyclohexylidène.

3. La résine époxy contenant du phosphore de la revendication 1, dans laquelle R dans le composé de Formule (I) est un mélange de diradicaux C₁₀H₁₄ bicycliques.

4. La résine époxy contenant du phosphore de la revendication 1, dans laquelle Y pour le composé de Formule (III) et le composé de Formule (IV) est le 2-biphényl-2'-oxy, formant une structure tricyclique.

5. La résine époxy contenant du phosphore de la revendication 1, dans laquelle X dans le composé de Formule (III) et le composé de Formule (IV) est le méthoxy.

6. La résine époxy contenant du phosphore de la revendication 1, ayant une teneur en phosphore comprise dans les limites d'une gamme allant de 2 pour cent en poids à 20 pour cent en poids rapporté au poids total de la résine époxy contenant du phosphore.

7. La résine époxy contenant du phosphore de la revendication 1, la résine époxy contenant du phosphore ayant un rapport molaire d'époxy au phosphore compris dans les limites d'une gamme allant de 10/1 à 1/1.

8. Une composition durcissable, comprenant la résine époxy contenant du phosphore des revendications 1 à 7.

9. La composition durcissable de la revendication 8, la composition durcissable ayant une teneur en phosphore comprise dans les limites d'une gamme allant de 0,5 pour cent en poids à 5 pour cent en poids rapporté à un poids total de la composition durcissable.

10. Un époxy durci, formé avec la résine époxy contenant du phosphore de n'importe laquelle des revendications 1 à 7.

11. L'époxy durci de la revendication 10, dans lequel l'époxy durci a une température de transition vitreuse comprise dans les limites d'une gamme allant de 150 degrés Celsius à 200 degrés Celsius.

12. Un procédé pour réaliser une résine époxy contenant du phosphore, comprenant :
le fait de fournir un éther polyglycidique avec une fonctionnalité d'au moins 4 en époxydant un produit de réaction d'une condensation de phénol et d'un dialdéhyde ; et
le fait de faire réagir l'éther polyglycidique avec un composé phosphore qui contient un groupement phosphore-hydrogène.

13. Le procédé de la revendication 12, où la résine époxy a une polydispersité inférieure à 2,0.

14. Le procédé de la revendication 12, où le dialdéhyde est un cycloalcane dicarboxaldéhyde.

15. Le procédé de la revendication 12, où le composé phosphore est le 9,10-dihydo-9-oxa-10-phosphaphénanthrène-10-oxyde.
